# EUROPÄISCHE PATENTSCHRIFT

(11) **EP 0 509 957 B1**
(45) Veröffentlichungstag und Bekanntmachung des Hinweises auf die Patenterteilung: **14.12.1994**
(21) Anmeldenummer: 92810211.0
(22) Anmeldetag: 24.03.1992
(51) Int. Cl.: G01G 11/08, B05B 7/14

(54) **Vorrichtung zum dosierten Zuführen von Pulver zu einer Pulververarbeitungseinheit**
Apparatus for the metered supply of powder to a powder processing unit
Appareil pour la distribution dosée de poudre à un appareil de traitement de poudre

(30) Priorität: 15.04.1991 DE 4112268
(43) Veröffentlichungstag der Anmeldung: 21.10.1992
(73) Patentinhaber: PLASMA TECHNIK AG, 5610 Wohlen 1 (CH)
(72) Erfinder: Keller, Silvano, CH-5315 Böttstein (CH)
(74) Vertreter: Rottmann, Maximilian R.

(56) Entgegenhaltungen:
- EP-A- 0 344 393
- DE-A- 3 300 911
- DE-B- 2 807 866
- FR-A- 2 526 541
- PATENT ABSTRACTS OF JAPAN vol. 6, no. 84 (P-117)(962) 22. Mai 1982 & JP-A-57 022 517

## Beschreibung

Die Erfindung betrifft eine Vorrichtung zum dosierten Zuführen von Pulver zu einer Pulververarbeitungseinheit, insbesondere einem Plasmaspritzgerät, mit einer volumetrisch arbeitenden Dosiereinheit, welche einen rotierenden Dosierteller mit vertikaler Drehachse, einen unterhalb des Dosiertellers angeordneten Antriebsteil, ferner oberhalb der Dosierplatte einen Pulverbehälter mit einem Auslass zum Ablegen von Pulver auf dem Dosierteller und eine unter Gasdruck arbeitende Pulverabnahmeeinheit zum Abnehmen von Pulver vom Dosierteller aufweist. Eine Vorrichtung dieser Art ist aus der DE-PS 28 07 866 bekannt.

Die Verarbeitung von Pulver in einem Plasmaspritzgerät erfordert eine genaue reproduzierbare Dosierung und eine gleichmässige Zufuhr des Pulvers. Dabei soll das Pulver mit einem bestimmten Gewicht pro Zeiteinheit dem Plasmaspritzgerät zugeführt werden. Diese Forderung verlangt an sich nach einer gravimetrischen Methode zur Dosierung des Pulvers. Bisher hat man sich aber meist mit einer volumetrischen Dosierung beholfen und durch Wägung einer zeitlich bestimmten Dosis auf einer separaten Waage eine Kalibrierung der Dosiereinheit nach Gewicht vorgenommen. Die gegenwärtig verfügbaren volumetrischen Dosiereinheiten, wie z.B. diejenige nach der deutschen Patentschrift Nr. 28 07 866, haben eine sehr hohe Dosiergenauigkeit. Nachteilig ist lediglich die nach jeder Erneuerung der Pulvercharge erforderliche Kalibrierung der Dosiervorrichtung.

Zur Vermeidung dieses Nachteils wurde auch bereits vorgeschlagen, die Dosiereinheit auf einer Waage aufzubauen und, ausgehend von einem anfänglichen Gesamtgewicht der Dosiereinheit einschliesslich Pulvervorrat, während der Pulverentnahme die Drehzahl des Antriebsmotors der Dosiereinheit, d.h. die volumetrische Dosis aufgrund der gemessenen Gewichtsabnahme zu regeln. Es hat sich jedoch gezeigt, dass eine derartige Anordnung recht unstabil ist und die Dosiereinheit im Betrieb zu Schwingungen neigt, welche die aufgrund der Genauigkeiten der Waage und der Dosiereinheit theoretisch vorgegebene Dosiergenauigkeit erheblich herabsetzen und eine unregelmässige Pulverzufuhr zur Folge haben können. Dies ist vor allem darauf zurückzuführen, dass sich die Dosiereinheit vornehmlich in vertikaler Richtung ausdehnt, also vom unteren Ende des Antriebs bis zum oberen Ende des Pulverbehälters verhältnismässig hoch ist im Vergleich zu dem im wesentlichen von der seitlichen Ausdehnung des Dosiertellers bestimmten Durchmesser der Dosiereinheit. Bei bekannten Dosiereinheiten der genannten Art kann dieses Verhältnis von Höhe zu Durchmesser bis zu 5 : 1 und mehr betragen.

Das Ziel der Erfindung ist die Schaffung einer Dosiervorrichtung der eingangs genannten Art, welche unter Vermeidung der erwähnten Nachteile eine gravimetrische Pulverdosierung von hoher Genauigkeit und Gleichmässigkeit ermöglicht.

Dieses Ziel lässt sich erfindungsgemäss dadurch erreichen, dass die Dosiereinheit auf einer Wägeplattform fixiert ist, dass die Wägeplattform auf mehreren Wägezellen ruht, welche im Kreis um die Drehachse der Dosiereinheit gleichmässig verteilt angeordnet sind, und dass der Antriebsteil der Dosiereinheit unterhalb der im Zentrum offenen Wägeplattform angeordnet ist, so dass der Schwerpunkt der gesamten Dosiereinheit wenigstens annähernd auf der Höhe der Wägeplattform liegt.

Durch die erfindungsgemässen Massnahmen lässt sich die Schwingneigung der Dosiereinheit so stark vermindern, dass praktisch keine die Dosiergenauigkeit beeinflussenden Schwingungen bzw. Vibrationen mehr auftreten. Zudem lässt sich die gravimetrische Dosis auf verhältnismässig einfache Weise so regeln, dass eine vorgängige Kalibrierung der Dosiervorrichtung bei der Erneuerung der Pulvercharge entfallen kann.

Eine bevorzugte Ausführungsform der Vorrichtung für den Ein-satz einer Dosiereinheit, welche eine ebene Auflagefläche aufweist sowie ein zylindrisches Gehäuse, welches von der Auflagefläche aus senkrecht nach unten ragt und den Antriebsteil enthält, ist dadurch gekennzeichnet, dass mit der Wägeplattform ein zylindrisches Rohr verbunden ist, welches sich von einer zentralen Öffnung in der Wägeplattform senkrecht nach unten erstreckt und den Antriebsteil der Dosiereinheit aufnimmt. Auf diese Weise ist die in achsialer Richtung auf die Wägeplattform aufzusetzende Dosiereinheit in achsialer und radialer Richtung auf der Wägeplattform positioniert, indem die Auflagefläche der Dosiereinheit auf der Wägeplattform ruht und das zylindrische Rohr das Antriebsgehäuse umfasst. Für die Festlegung einer bestimmten, auf die Längsachse bezogene Drehwinkellage der Dosiereinheit können geeignete Rastmittel vorgesehen sein.

Vorzugsweise ist die Dosiereinheit auswechselbar auf der Wägeplattform fixiert, wobei zum Fixieren der Dosiereinheit an der Wägeplattform mehrere Klemm- oder Spannorgane vorgesehen und an deren Umfang gleichmässig verteilt angeordnet sein können. Gewöhnlich besitzt die Dosiereinheit ein den Dosierteller umgebendes flaches zylindrisches Gehäuse, an welchem die Klemm- oder Spannorgane unmittelbar angreifen können.

Zweckmässigerweise sind ausserdem Mittel vorgesehen, welche die Wägeplattform im Zentrum der Wägezellen halten und dieselbe gegen Verdrehen sichern. Dazu können am stationären Teil der Vorrichtung und an der Wägeplattform geeignete gegenseitige Führungsmittel vorgesehen sein. Eine bevorzugte Lösung in dieser Beziehung besteht darin, daß die Wägeplattform durch biegeelastische Lenker vertikalbeweglich geführt ist. Derartige Lenker bilden zugleich eine Sicherung gegen Verdrehen der Wägeplattform.

Zum automatischen Betrieb der Vorrichtung ist mit Vorteil eine Regeleinrichtung vorgesehen, welche einen speicherprogrammierten Rechner aufweist, wobei der Rechner aus den Gewichtsangaben der Wägeeinrichtung und dem Sollwert des Pulverdurchsatzes die Stellgrösse zur Drehzahlregelung des Antriebsmotors für den Dosierteller berechnet.

In der Zeichnung sind Ausführungsbeispiele der Erfindung dargestellt, und zwar zeigen:

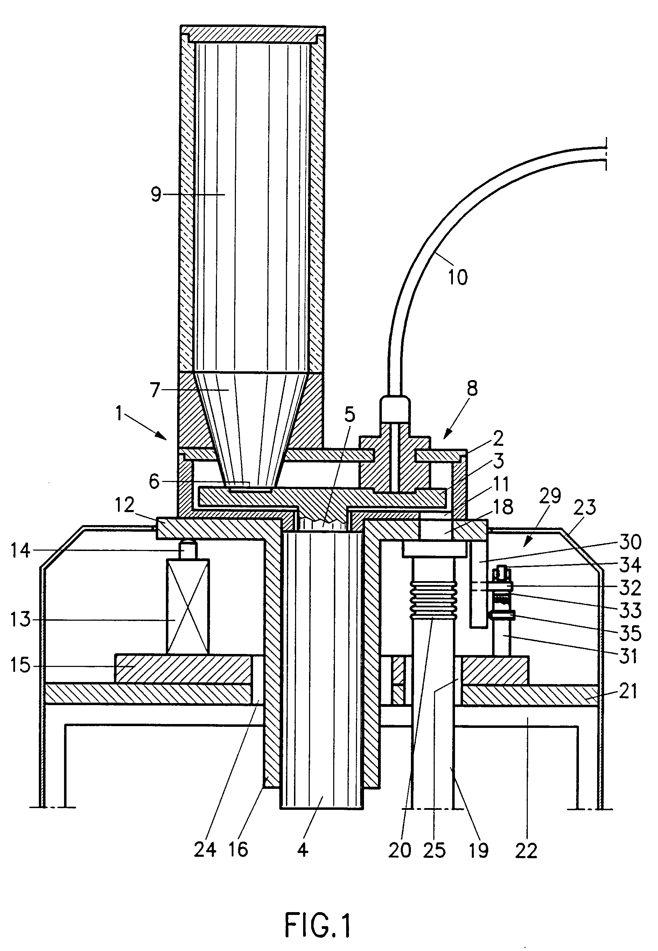

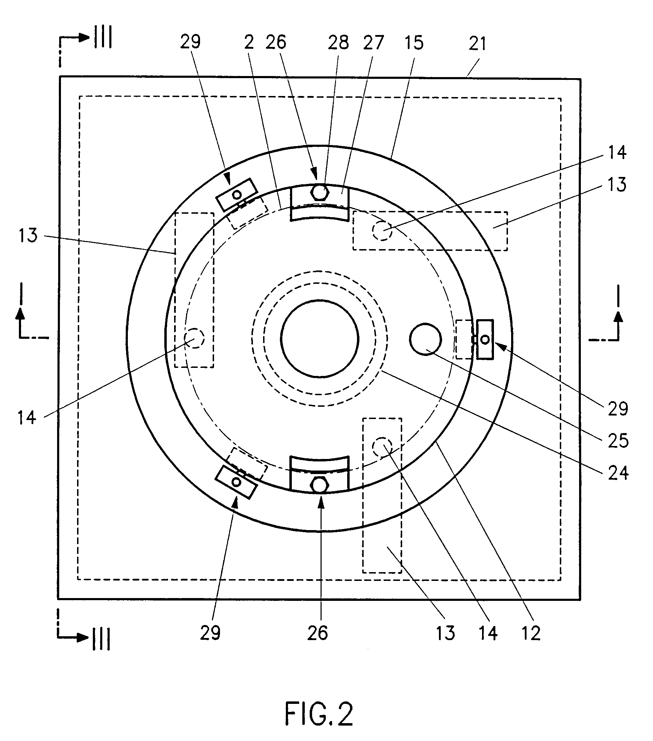

- Fig. 1: einen achsialen Längsschnitt durch eine Vorrichtung gemäss einer ersten Ausführungsform der Erfindung, nach der Linie I-I in Fig. 2;
- Fig. 2: den Grundriss der Vorrichtung nach Fig. 1, ohne Dosiereinheit;
- Fig. 3: eine Seitenansicht des mittleren Teils der Vorrichtung nach Fig. 1, in Richtung der Pfeile III-III in Fig. 2;
- Fig. 4: einen achsialen Längsschnitt durch einen Teil einer Vorrichtung gemäss einer zweiten Ausführungsform der Erfindung; und
- Fig. 5: ein Blockschema der Regeleinrichtung für den automatischen Betrieb der erfindungsgemässen Vorrichtung.

Die Ausführungsbeispiele zeigen eine gesamthaft mit 1 bezeichnete Dosiereinheit, wie sie im wesentlichen aus der deutschen Patentschrift Nr. 28 07 866 bekannt ist. Es handelt sich dabei um eine Dosiereinheit zum volumetrisch dosierten Zuführen von Pulver zu einer Pulververarbeitungseinheit, insbesondere zu einem Plasmaspritzgerät.

In einem zweiteiligen, flachen zylindrischen Gehäuse 2 der Dosiereinheit 1 ist ein Dosierteller 3 gasdicht gelagert. An der Unterseite dieses Gehäuses 2 ist ein weiteres zylindrisches Gehäuse 4 befestigt, welches den Antriebsteil der Dosiereinheit enthält. Der Antriebsteil umfasst in nicht näher dargestellter Weise einen Antriebsmotor mit regelbarer Drehzahl, welcher über eine Kupplung und ein Getriebe mit einem Wellenstumpf 5 des Dosiertellers 3 verbunden ist. In dem Dosierteller 3 ist eine als Ringnut ausgebildete flache Pulverrille 6 vorgesehen, welcher das Pulver über einen Trichter 7 zugeführt und durch eine Absaugvorrichtung 8 entnommen wird. Oberhalb des Trichters 7 befindet sich der dicht verschlossene Pulverbehälter 9. Die Absaugvorrichtung 8 ist über einen flexiblen Schlauch 10 mit der nicht dargestellten Pulververarbeitungseinheit verbunden. An der Unterseite des Gehäuses 2 befindet sich eine Einlassöffnung 11 für das Druckgas zum Betrieb der Absaugvorrichtung 8.

Die Unterseite des Gehäuses 2 bildet eine Auflagefläche, mit welcher die Dosiereinheit 1 auf einer runden Wägeplattform 12 aufliegt. Diese Wägeplattform 12 ist Teil einer Wägeeinrichtung, welche im vorliegenden Beispiel drei Wägezellen 13 umfasst, auf deren Lastaufnehmer 14 die Wägeplattform 12 ruht. Die Wägezellen 13 sind bezüglich ihrer Lastaufnehmer 14 um die Drehachse der Dosiereinheit gleichmässig verteilt auf einer ebenfalls runden Grundplatte 15 angeordnet. Mit der Wägeplattform 12 ist ein zylindrisches Rohr 16 verbunden, welche sich von einer zentralen Öffnung in der Wägeplattform 12 senkrecht nach unten erstreckt und den Antriebsteil der Dosiereinheit 1 aufnimmt. In der Wägeplattform 12 befindet sich ferner eine Durchgangsbohrung 18, welche mit der Einlassöffnung 11 des Gehäuses 2 korrespondiert und an welche eine flexible Gasdruckleitung 19 angeschlossen ist, wobei die Flexibilität der Gasdruckleitung 19 in der Zeichnung durch eine Faltenstruktur 20 angedeutet ist.

Die Grundplatte 15 der Wägeeinrichtung ist an einer quadratischen Gestellplatte 21 befestigt, welche ihrerseits auf einem Gestellrahmen 22 ruht. Die ganze Wägeeinrichtung ist durch eine Verschalung 23 abgeschlossen. Grundplatte 15 und Gestellplatte 21 besitzen Bohrungen 24 und 25 für den freien Durchtritt des zylindrischen Rohres 16 der Wägeplattform 12 bzw. der Gasdruckleitung 19.

Die Dosiereinheit 1 ist auswechselbar auf der Wägeplattform 12 fixiert, und zwar mit Hilfe von drehbaren Klemmorganen 26, deren Klemmbacken 27 das Gehäuse 2 übergreifen und mittels einer Klemmschraube 28 festziehbar sind. Im vorliegenden Beispiel sind zwei Klemmorgane 26 vorhanden, welche einander diametral gegenüberliegen. Anstelle der gezeigten Klemmorgane können z.B. auch Schnallenspanner vorgesehen sein.

Im weiteren sind Mittel vorgesehen, welche die Wägeplattform 12 im Zentrum der Wägezellen 13 halten und dieselbe gegen Verdrehen sichern. Im vorliegenden Beispiel handelt es sich bei diesen Mitteln um drei Führungsorgane 29, welche am Umfang der Wägeplattform 12 gleichmässig verteilt angeordnet sind und je einen an der Wägeplattform 12 befestigten oberen Führungsteil 30 und einen an der Grundplatte 15 befestigten unteren Führungsteil 31 aufweisen. Dabei greift ein im oberen Führungsteil 30 festsitzender Bolzen 32 in einen vertikalen Längsschlitz 33 des unteren Führungsteils 31 ein und verhindert so ein Verdrehen der Wägeplattform 12, während eine Stellschraube 34 die Vertikalbewegung der Wägeplattform 12 nach oben begrenzt. Schliesslich verhindert eine Stellschraube 35 im unteren Führungsteil 31 eine seitliche Verschiebung der Wägeplattform 12.

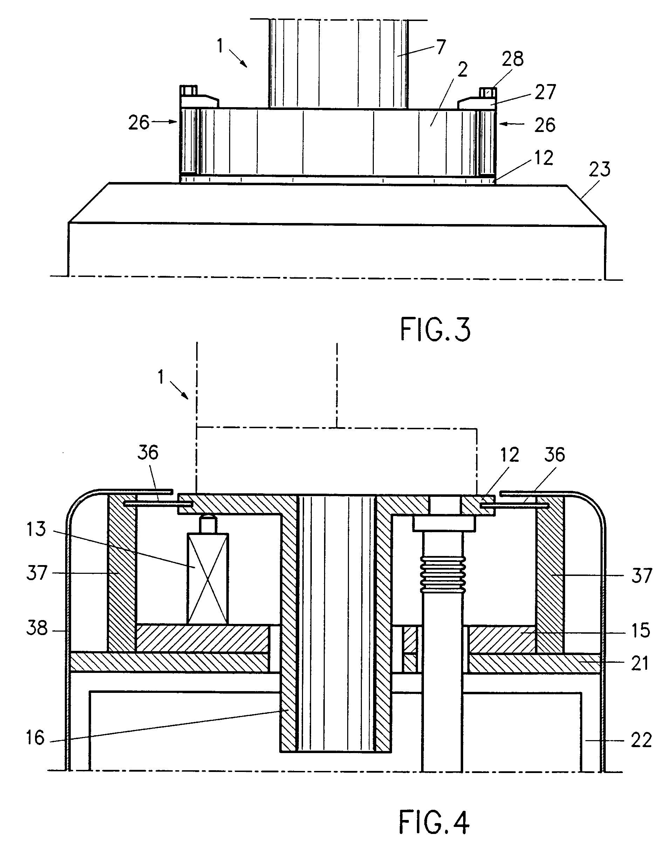

Demgegenüber ist zu demselben Zweck bei der im übrigen gleichen Ausführungsform nach Fig. 4 die Wägeplattform 12 durch biegeelastische Lenker 36 vertikalbeweglich geführt, wobei jeder Lenker 36 einerseits am Umfang der Wägeplattform 12 und andererseits an einer mit der Grundplatte 15 verbundenen Stütze 37 befestigt ist. Mit 38 ist eine Abdeckung bezeichnet.

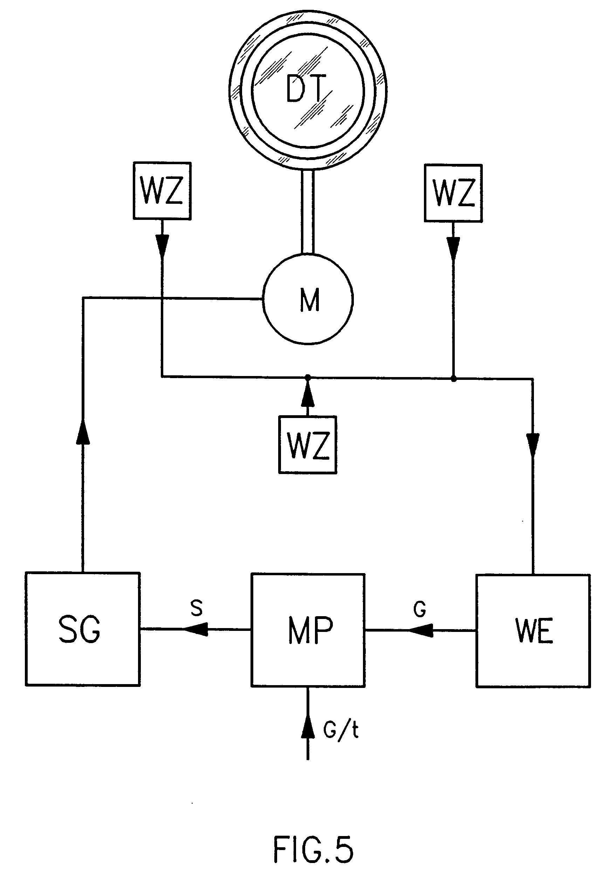

Das Blockschema nach Fig. 5 zeigt den Antriebsmotor M für den Dosierteller DT, sowie die drei Wägezellen WZ. Die von einzelnen Wägezellen WZ abgegebenen Gewichtssignale werden in der Waagenelektronik WE zu einem das Gesamtgewicht G darstellenden Signal verarbeitet, welches einem Mikroprozessor MP zugeführt wird. Dieser berechnet aus dem Gesamtgewicht G und dem Sollwert G/t des Pulverdurchsatzes die Stellgrösse S, welche das Stellgerät SG in eine die Drehzahl des Antriebsmotors M regelnde Stellbewegung umsetzt.

## Patentansprüche

1. Vorrichtung zum dosierten Zuführen von Pulver zu einer Pulververarbeitungseinheit, insbesondere einem Plasmaspritzgerät, mit einer volumetrisch arbeitenden Dosiereinheit (1), welche einen rotierenden Dosierteller (3) mit vertikaler Drehachse, einen unterhalb des Dosiertellers angeordneten Antriebsteil, ferner oberhalb des Dosiertellers (3) einen Pulverbehälter (9) mit einem Auslass zum Ablegen von Pulver auf dem Dosierteller (3) und eine unter Gasdruck arbeitende Pulverabnahmeeinheit (8) zum Abnehmen von Pulver vom Dosierteller aufweist, dadurch gekennzeichnet, dass die Dosiereinheit (1) auf einer Wägeplattform (12) fixiert ist, dass die Wägeplattform (12) auf mehreren Wägezellen (13) ruht, welche im Kreis um die Drehachse der Dosiereinheit (1) gleichmässig verteilt angeordnet sind, und dass der Antriebsteil (4) der Dosiereinheit unterhalb der im Zentrum offenen Wägeplattform (12) angeordnet ist, so dass der Schwerpunkt der gesamten Dosiereinheit (1) wenigstens annähernd auf der Höhe der Wägeplattform (12) liegt.

2. Vorrichtung nach Anspruch 1, bei der die Dosiereinheit (1) eine ebene Auflagefläche aufweist sowie ein zylindrisches Gehäuse (4), welches von der Auflagefläche aus senkrecht nach unten ragt und den Antriebsteil enthält, dadurch gekennzeichnet, dass mit der Wägeplattform (12) ein zylindrisches Rohr (16) verbunden ist, welches sich von einer zentralen Öffnung in der Wägeplattform (12) senkrecht nach unten erstreckt und den Antriebsteil der Dosiereinheit (1) aufnimmt.

3. Vorrichtung nach Anspruch 1, dadurch gekennzeichnet, dass die Dosiereinheit (1) auswechselbar auf der Wägeplattform (12) fixiert ist.

4. Vorrichtung nach Anspruch 3, dadurch gekennzeichnet, dass an der Wägeplattform (12) mehrere Klemm- oder Spannorgane (26) zum Fixieren der Dosiereinheit (1) vorgesehen und an deren Umfang gleichmässig verteilt angeordnet sind.

5. Vorrichtung nach Anspruch 4, dadurch gekennzeichnet, dass die Klemm- oder Spannorgane (26) an einem den Dosierteller (3) umgebenden, flachen zylindrischen Gehäuse (2) der Dosiereinheit (1) angreifen.

6. Vorrichtung nach Anspruch 1, dadurch gekennzeichnet, dass Mittel (29; 36) vorgesehen sind, welche die Wägeplattform (12) im Zentrum der Wägezellen (13) halten und dieselbe gegen Verdrehen sichern.

7. Vorrichtung nach Anspruch 6, dadurch gekennzeichnet, dass die Wägeplattform (12) durch biegeelastische Lenker (36) vertikalbeweglich geführt ist.

8. Vorrichtung nach Anspruch 1, dadurch gekennzeichnet, dass eine Regeleinrichtung vorgesehen ist, welche einen Mikroprozessor in Form eines speicherprogrammgesteuerten Rechners aufweist, wobei der Rechner aus der Gewichtsangabe (G) der Wägeeinrichtung und dem Sollwert (G/t) des Pulverdurchsatzes die Stellgrösse (S) zur Drehzahlregelung des Antriebsmotors (M) für den Dosierteller (DT) berechnet.

## Claims

1. Apparatus for the metered supply of powder to a powder processing unit, in particular a plasma spray device with a metering unit (1) which operates volumetrically and has a rotating metering plate (3) with vertical axis of rotation, a drive component which is arranged underneath the metering plate, in addition above the metering plate (3) a powder container (9) with an outlet for depositing powder on the metering plate (3), and a powder removal unit (8) operating under gas pressure for removing powder from the metering plate; characterized in that the metering unit (1) is fixed on a weighing platform (12); in that the weighing platform (12) rests on a plurality of weighing cells (13) which are arranged distributed uniformly in a circle about the axis of rotation of the metering unit (1); and in that the drive component (4) of the metering unit is arranged underneath the weighing platform (12) which is open in the centre so that the centre of gravity of the entire metering unit (1) lies at least approximately at the level of the weighing platform (12).

2. Apparatus according to Claim 1, in which the metering unit (1) has a planar supporting face and a cylindrical housing (4) which projects vertically downwards from the supporting face and contains the drive component; characterized in that a cylindrical pipe (16) is connected to the weighing platform (12) and extends vertically downwards from a central opening in the weighing platform (12) and receives the drive component of the metering unit (1).

3. Apparatus according to Claim 1, characterized in that the metering unit (1) is fixed on the weighing platform (12) in a replaceable fashion.

4. Apparatus according to Claim 3, characterized in that a plurality of clamping and tensioning elements (26) for fixing the metering unit (1) are provided on the weighing platform (12) and are arranged distributed uniformly on the circumference of the said metering unit (1).

5. Apparatus according to Claim 4, characterized in that the clamping or tensioning elements (26) engage on a flat cylindrical housing (2), surrounding the metering plate (3), of the metering unit (1).

6. Apparatus according to Claim 1, characterized in that means (29; 36) are provided which hold the weighing platform (12) in the centre of the weighing cells (13) and secure the said weighing platform (12) against rotation.

7. Apparatus according to Claim 6, characterized in that the weighing platform (12) is guided in a vertically movable fashion by flexurally elastic links (36).

8. Apparatus according to Claim 1, characterized in that a control device is provided which has a microprocessor in the form of a memory program-controlled computer, the computer calculating the control variable (S) for controlling the speed of revolution of the drive motor (M) for the metering plate (DT) from the weight information (G) of the weighing device and the set value (G/t) of the powder delivery rate.

## Revendications

1. Dispositif pour l'alimentation dosée en poudre d'une unité de traitement de poudre, en particulier d'un dispositif de projection plasma, comprenant une unité (1) de dosage fonctionnant de façon volumétrique, laquelle présente un plateau tournant (3) de dosage à axe de rotation vertical, un organe d'entraînement disposé en dessous du plateau de dosage, en outre au-dessus du plateau (3) de dosage un récipient (9) à poudre comprenant une ouverture pour déposer de la poudre sur le plateau (3) de dosage et une unité (8) d'enlèvement de poudre à fonctionnement pneumatique pour retirer de la poudre du plateau de dosage, caractérisé en ce que l'unité (1) de dosage est fixée sur une plate-forme de pesée (12), en ce que la plate-forme de pesée (12) repose sur plusieurs cellules de pesée (13), lesquelles sont disposées selon une répartition régulière en cercle autour de l'axe de rotation de l'unité (1) de dosage et en ce que l'organe d'entraînement (4) de l'unité de dosage est disposé en dessous de la plate-forme de pesée (12) ouverte au centre, de sorte que le centre de gravité de l'unité (1) de dosage commune est disposé au moins approximativement à la hauteur de la plate-forme de pesée (12).

2. Dispositif selon la revendication 1, dans lequel l'unité (1) de dosage présente une surface d'appui plane ainsi qu'un boîtier cylindrique (4), lequel s'étend verticalement vers le bas et contient l'organe d'entraînement, caractérisé en ce qu'à la plate-forme de pesée (12) est relié un tube cylindrique (16), lequel s'étend verticalement vers le bas à partir d'une ouverture centrale dans la plate-forme de pesée (12) et reçoit l'organe d'entraînement de l'unité (1) de dosage;

3. Dispositif selon la revendication 1, caractérisé en ce que l'unité (1) de dosage est fixée de façon amovible sur la plate-forme de pesée (12).

4. Dispositif selon la revendication 3, caractérisé en ce que sur la plate-forme de pesée (12), plusieurs organes (26) de serrage ou de tension sont prévus pour la fixation de l'unité (1) de dosage et sont disposés selon une répartition régulière sur la circonférence dudit plateau.

5. Dispositif selon la revendication 4, caractérisé en ce que les organes (26) de serrage ou de tension viennent en prise avec un boîtier (2) cylindrique plat de l'unité (1) de dosage, lequel entoure le plateau (3) de dosage.

6. Dispositif selon la revendication 1, caractérisé en ce qu'il est prévu des moyens (29 ; 36), lesquels maintiennent la plate-forme de pesée (12) au centre des cellules de pesée (13) et garantissent celui-ci de la torsion.

7. Dispositif selon la revendication 6, caractérisé en ce que la plate-forme de pesée (12) est guidée selon un mouvement vertical par des guides (36) à flexion élastique.

8. Dispositif selon la revendication 1, caractérisé en ce qu'un dispositif de réglage est prévu, lequel présente un microprocesseur se présentant sous la forme d'un calculateur commandé par programme enregistré, le calculateur calculant, à partir de la donnée du poids (G) du dispositif de pesée et de la valeur prescrite (G/t) du débit de poudre, la valeur de réglage (S) pour le réglage de la vitesse de rotation du moteur d'entraînement (M) pour le plateau de dosage (DT).
